# EUROPÄISCHE PATENTSCHRIFT

(11) **EP 2 617 114 B1**
(45) Veröffentlichungstag und Bekanntmachung des Hinweises auf die Patenterteilung: **03.04.2019**
(21) Anmeldenummer: 11773713.0
(22) Anmeldetag: 18.10.2011
(51) Int. Cl.: H02J 3/18, G05F 1/70

(54) **STROMVERSORGUNGSEINRICHTUNG FÜR EINE NICHTLINEARE, ZEITLICH VARIIERENDE LAST**
CURRENT SUPPLY UNIT FOR A NONLINEAR TIME-VARIALBE LOAD
ALIMENTATION DE COURANT POUR UNE CHARGE NON LINEAIRE, VARIABLE DANS LE TEMPS

(30) Priorität: 19.10.2010 EP 10187992
(43) Veröffentlichungstag der Anmeldung: 24.07.2013
(73) Patentinhaber: Siemens Aktiengesellschaft, 80333 München (DE)
(72) Erfinder: WONG, Kwok Tung, 90617 Puschendorf (DE)
(86) Internationale Anmeldenummer: PCT/EP2011/068166
(87) Internationale Veröffentlichungsnummer: WO 2012/052424

(56) Entgegenhaltungen:
- EP-A1- 2 202 863
- WO-A1-2010/115471
- US-A- 6 075 350
- PENG F Z ET AL: "A universal STATCOM with delta-connected cascade multilevel inverter", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, 20. Juni 2004 (2004-06-20), Seiten 3529-3533VOL.5, XP010738277, DOI: DOI:10.1109/PESC.2004.1355099 ISBN: 978-0-7803-8399-9

## Beschreibung

Die vorliegende Erfindung betrifft eine Stromversorgungseinrichtung für eine nichtlineare, zeitlich variierende Last,
- wobei die Stromversorgungseinrichtung ein Stromsystem mit mehreren Phasen aufweist,
- wobei an die Phasen des Stromsystems die nichtlineare, zeitlich variierende Last und ein Blindleistungskompensator angeschaltet sind,
- wobei der Blindleistungskompensator als Multilevelkonverter mit mehreren Strängen ausgebildet ist,
- wobei die Stränge des Multilevelkonverters einerseits mit je einer der Phasen des Stromsystems und andererseits an einem gemeinsamen Sternpunkt miteinander verbunden sind,
- wobei die Stromversorgungseinrichtung einen Filterkreis aufweist, über den Oberschwingungen von Last- und Konverterströmen filterbar sind,
- wobei der Filterkreis mehrere Stränge aufweist.

Nichtlineare, zeitlich variierende Lasten wie beispielsweise Drehstrom-Lichtbogenöfen können deutliche Netzrückwirkungen zur Folge haben, insbesondere sogenannten Flicker. Aus diesem Grund weisen Stromversorgungsanlagen für nichtlineare, zeitlich variierenden Lasten in der Regel einen Blindleistungskompensator auf. Der Blindleistungskompensator ist der nichtlinearen, zeitlich variierenden Last parallel geschaltet. Im einfachsten Fall kann der Blindleistungskompensator als sogenannter TCR (thyristor controlled reactor) ausgebildet sein, siehe beispielsweise die EP 0 847 612 B1.

Eine Stromversorgungseinrichtung der eingangs genannten Art ist beispielsweise aus der DE 10 2008 049 610 A1 und der EP 2 202 863 A1 bekannt.

Im Stand der Technik ist zwar ausdrücklich erwähnt, dass der Multilevelkonverter alternativ in Stern- oder in Dreieckschaltung an die Phasen des Stromsystems angeschaltet sein kann. In der Praxis ist der Multilevelkonverter jedoch stets in Dreieckschaltung an die Phasen des Stromsystems angeschaltet. Der Grund hierfür besteht darin, dass der Multilevelkonverter zu einem bestimmten Zeitpunkt über einen seiner Stränge Energie absorbieren und zugleich über einen anderen seiner Stränge Energie abgeben können muss. Dies kann - sowohl bei einer Dreieckschaltung als auch bei einer Sternschaltung - sehr schnell zu einem Überschreiten zulässiger Spannungsgrenzen führen, die ein Blockieren des Multilevelkonverters zur Folge haben.

Bei einer Anschaltung des Multilevelkonverters in Dreieckschaltung ist jedoch bekannt, die Spannungsgrenzen dadurch einzuhalten, dass innerhalb des von den Strängen des Multilevelkonverters gebildeten Kreises ein entsprechender Stromfluss generiert wird, der sich aufbauende Spannungen im zulässigen Rahmen hält. Ein derartiger Nullstromfluss ist bei einer Sternschaltung nicht ohne Weiteres möglich.

Es ist weiterhin bekannt, innerhalb des Multilevelkonverters einen hochfrequent betriebenen Wechselspannungskreis vorzusehen, welcher die einzelnen Gleichspannungskreise aller Module aller Stränge des Multilevelkonverters miteinander verbindet. Der Energieaustausch erfolgt bei dieser Ausgestaltung über eine Gleichspannungs-Wechselspannungs-Wandlung nebst nachgeschalteter Wechselspannungs-Gleichspannungs-Wandlung. Diese Ausgestaltung des Multilevelkonverters ist sowohl in Dreieckals auch in Sternschaltung verwendbar. Die Ausgestaltung des Multilevelkonverters ist in diesem Fall jedoch sehr komplex. Weiterhin ist der mögliche Energietransfer pro Zeiteinheit relativ gering.

Aus der WO 2010/115471 A1 ist eine Stromversorgungseinrichtung für eine nichtlineare, zeitlich variierende Last bekannt,
- wobei die Stromversorgungseinrichtung ein Stromsystem mit mehreren Phasen aufweist,
- wobei an die Phasen des Stromsystems die nichtlineare, zeitlich variierende Last und ein Blindleistungskompensator angeschaltet sind,
- wobei der Blindleistungskompensator als Multilevelkonverter mit mehreren Strängen ausgebildet ist,
- wobei die Stränge des Multilevelkonverters einerseits mit je einer der Phasen des Stromsystems und andererseits an einem gemeinsamen Sternpunkt miteinander verbunden sind.

Bei dieser Stromversorgungseinrichtung ist der gemeinsame Sternpunkt des Multilevelkonverters mit einem Sternpunkt eines Zickzacktransformators verbunden, so dass der gemeinsame Sternpunkt des Multilevelkonverters sowohl über die Stränge des Multilevelkonverters als auch über den Zickzacktransformator mit den Phasen des Stromsystems verbunden ist. Die Verbindung über den Zickzacktransformator ist derart ausgebildet, dass in Bezug auf das Stromnullsystem des Stromsystems eine niederohmige und in Bezug auf das Strommitsystem des Stromsystems und das Stromgegensystem des Stromsystems eine hochohmige Verbindung des gemeinsamen Sternpunkts des Multilevelkonverters mit den Phasen des Stromsystems besteht.

Die Aufgabe der vorliegenden Erfindung besteht darin, eine Stromversorgungseinrichtung der eingangs genannten Art derart auszugestalten, dass der Multilevelkonverter auf einfache Weise betriebssicher betreibbar ist, ohne eine Zickzackwicklung zu benötigen.

Die Aufgabe wird durch eine Stromversorgungseinrichtung mit den Merkmalen des Anspruchs 1 gelöst. Vorteilhafte Ausgestaltungen der erfindungsgemäßen Stromversorgungseinrichtung sind Gegenstand der abhängigen Ansprüche 2 bis 5.

Erfindungsgemäß ist vorgesehen, eine Stromversorgungseinrichtung der eingangs genannten Art dadurch auszugestalten,
- dass die Stränge des Filterkreises einerseits mit je einer der Phasen des Stromsystems und andererseits an einem gemeinsamen Sternpunkt des Filterkreises miteinander verbunden sind,
- dass der gemeinsame Sternpunkt des Multilevelkonverters mit dem Sternpunkt des Filterkreises verbunden ist, so dass der gemeinsame Sternpunkt des Multilevelkonverters sowohl über die Stränge des Multilevelkonverters als auch über den Filterkreis mit den Phasen des Stromsystems verbunden ist, und
- dass die Verbindung über den Filterkreis derart ausgebildet ist, dass in Bezug auf das Stromnullsystem des Stromsystems eine niederohmige und in Bezug auf das Strommitsystem des Stromsystems und das Stromgegensystem des Stromsystems eine hochohmige Verbindung des gemeinsamen Sternpunkts des Multilevelkonverters mit den Phasen des Stromsystems besteht.

Vorzugsweise ist zwischen dem gemeinsamen Sternpunkt des Filterkreises und dem gemeinsamen Sternpunkt des Multilevelkonverters eine Drossel angeordnet. Die Drossel kann insbesondere derart dimensioniert sein, dass die kombinierte Impedanz von Drossel und Filterkreis Null ist.

In der Regel weist die Stromversorgungseinrichtung zusätzlich zu dem oben genannten Filterkreis mindestens einen weiteren Filterkreis auf, über den ebenfalls Oberschwingungen der Last- und Konverterströme filterbar sind.

Die Anzahl an Phasen des Stromsystems kann nach Bedarf bestimmt sein. In der Regel sind drei Phasen vorhanden.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: den prinzipiellen Aufbau einer Stromversorgungseinrichtung für eine nichtlineare, zeitlich variierende Last,
- FIG 2 und 3: je eine mögliche Ausgestaltung der Stromversorgungseinrichtung von FIG 1 und
- FIG 4: eine mögliche erfindungsgemäße Ausgestaltung der Stromversorgungseinrichtung von FIG 1.

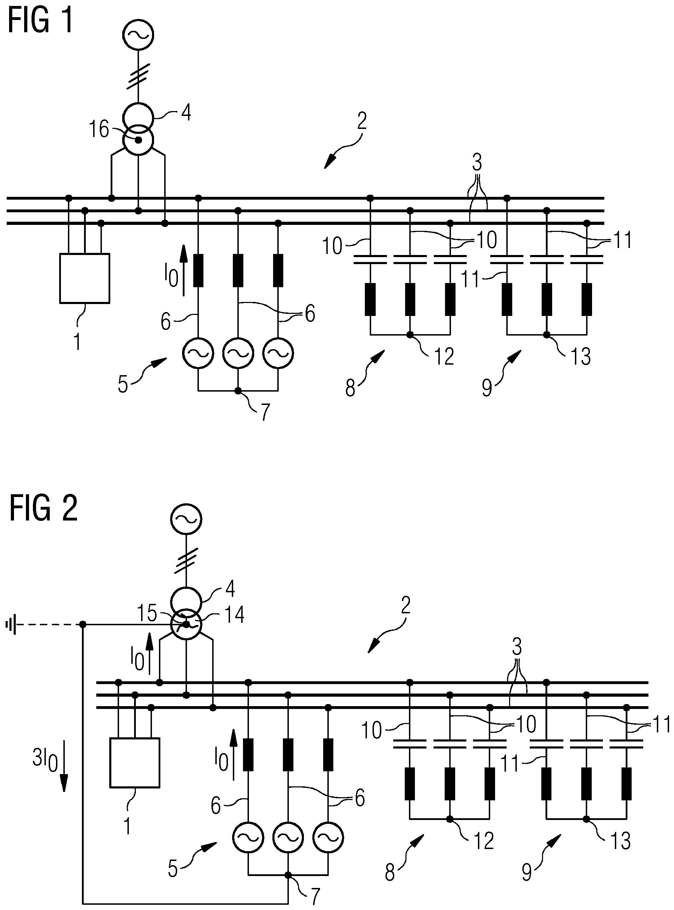

Gemäß FIG 1 ist eine nichtlineare, zeitlich variierende Last 1 - rein beispielhaft - als elektrischer Lichtbogenofen ausgebildet. Der Lichtbogenofen 1 wird über ein Stromsystem 2 mit elektrischer Energie versorgt. Das Stromsystem 2 weist mehrere Phasen 3 auf. Der Lichtbogenofen 1 ist an die Phasen 3 des Stromsystems 2 angeschaltet. Die Anzahl an Phasen 3 kann nach Bedarf bestimmt sein. In der Regel und entsprechend der Darstellung von FIG 1 sind drei Phasen 3 vorhanden.

Die am Lichtbogenofen 1 anliegende Spannung ist in der Regel relativ niedrig. Sie liegt typischerweise im Bereich zwischen mehreren hundert Volt und zwei Kilovolt. Die Spannung des Stromsystems 2 hingegen liegt in der Regel erheblich höher. Meist liegt sie im zweistelligen Kilovoltbereich oder knapp darüber. Typische Spannungen des Stromsystems 2 sind 11 Kilovolt, 30 Kilovolt und 110 Kilovolt. Zwischen dem Lichtbogenofen 1 und den Phasen 3 des Stromsystems 2 ist daher ein Ofentransformator angeordnet. Im Rahmen der vorliegenden Erfindung ist der Ofentransformator jedoch nur von untergeordneter Bedeutung und daher in FIG 1 nicht dargestellt.

Bei dem Stromsystem 2 kann es sich um ein externes, größeres Stromsystem handeln. Alternativ kann es sich um ein internes Stromsystem des Betreibers des Lichtbogenofens 1 handeln. Im Falle eines internen Stromsystems kann es sich um ein eigenständiges Stromsystem handeln. Alternativ kann die Stromversorgungseinrichtung einen Netztransformator 4 aufweisen, über den die Phasen 3 des Stromsystems 2 aus einem externen Netz mit elektrischer Energie versorgbar sind. Das externe Netz kann eine relativ hohe Spannung von beispielsweise 110 Kilovolt oder 380 Kilovolt aufweisen.

An die Phasen 3 des Stromsystems 2 ist weiterhin ein Blindleistungskompensator 5 angeschaltet. Der Blindleistungskompensator 5 ist als Multilevelkonverter mit mehreren Strängen 6 ausgebildet. Gemäß FIG 1 sind die Stränge 6 des Multilevelkonverters 5 einerseits mit je einer der Phasen 3 des Stromsystems 2 und andererseits an einem gemeinsamen Sternpunkt 7 miteinander verbunden.

Multilevelkonverter 5 sind als solche allgemein bekannt. Bei ihnen besteht jeder Strang 6 aus einer mehrstufigen Reihenschaltung von Modulen, wobei jedes Modul einen Speicherkondensator und selbstgeführte Halbleiterschalter umfasst. Der Begriff "selbstgeführt" bedeutet, dass die Halbleiterschalter durch den Halbleiterschaltern von außen zugeführte Steuersignale sowohl zuschaltbar als auch abschaltbar sind. Beispielsweise können die selbstgeführten Halbleiterschalter als IGBTs oder als GTO-Thyristoren ausgebildet sein. Der Begriff "selbstgeführt" steht somit im Gegensatz zum Begriff "netzgeführt". Dieser Begriff bedeutet, dass das jeweilige Schaltelement zwar gezielt zugeschaltet werden kann, jedoch nicht durch ein externes Steuersignal abgeschaltet werden kann. Ein Beispiel eines netzgeführten Halbleiterschaltelements ist ein "normaler" Thyristor.

Die Halbleiterschalter jedes Moduls sind unabhängig von den Halbleiterschaltern der anderen Module desselben Strangs 6 und der anderen Stränge 6 schaltbar. In Abhängigkeit von dem jeweiligen Schaltzustand der Halbleiterschalter des entsprechenden Moduls ist der jeweilige Speicherkondensator des jeweiligen Moduls alternativ überbrückt oder aktiv. Details zu Aufbau, Wirkungsweise und Betrieb des Multilevelkonverters 5 sind beispielsweise der US 6 075 350 A und der EP 2 202 863 A1 zu entnehmen.

Die Stromversorgungseinrichtung weist in der Regel weiterhin mindestens einen Filterkreis 8, 9 auf. Dargestellt sind in FIG 1 zwei derartige Filterkreise 8, 9. Über jeden Filterkreis 8, 9 sind Oberschwingungen von Last- und Konverterströmen filterbar. Die Oberschwingungen sind durch den Betrieb des Lichtbogenofens 1 hervorgerufen.

Jeder Filterkreis 8, 9 ist auf eine bestimmte Filterfrequenz ausgelegt. Jeder Filterkreis 8, 9 weist mehrere Stränge 10, 11 auf. Jeder Strang 10, 11 des jeweiligen Filterkreises 8, 9 ist einerseits mit je einer der Phasen 3 des Stromsystems 2 verbunden. Weiterhin sind die Stränge 10, 11 des jeweiligen Filterkreises 8, 9 an einem jeweiligen gemeinsamen Sternpunkt 12, 13 des jeweiligen Filterkreises 8, 9 miteinander verbunden.

Bei den Filterkreisen 8, 9 fällt eine jeweilige zu kompensierende Filterleistung an. Die Filterleistungen der Filterkreise 8, 9 sind in der Regel verschieden voneinander. Die Filterkreise 8, 9 sind auf die jeweils zu kompensierende Filterleistung ausgelegt.

Die einzelnen Stränge 6 des Multilevelkonverters 5 müssen Ströme aufnehmen und abgeben können. Die in den einzelnen Strängen 6 des Multilevelkonverters 5 fließenden Ströme sind in der Regel verschieden voneinander. Im Gegensatz zu einer Dreieckschaltung der Stränge 6, bei der die Stränge 6 des Multilevelkonverters 5 mit je zwei der Phasen 3 des Stromsystems 2 verbunden sind, ist ein Kreisstrom innerhalb des Multilevelkonverters 5 nicht möglich bzw. zumindest nicht ohne Weiteres möglich. In Verbindung mit den FIG 2 bis 4 werden nachfolgend Ausgestaltungen der Stromversorgungseinrichtung von FIG 1 erläutert, bei denen der Nullstrom - in den FIG 2 bis 4 mit I₀ bezeichnet - anderweitig realisierbar ist.

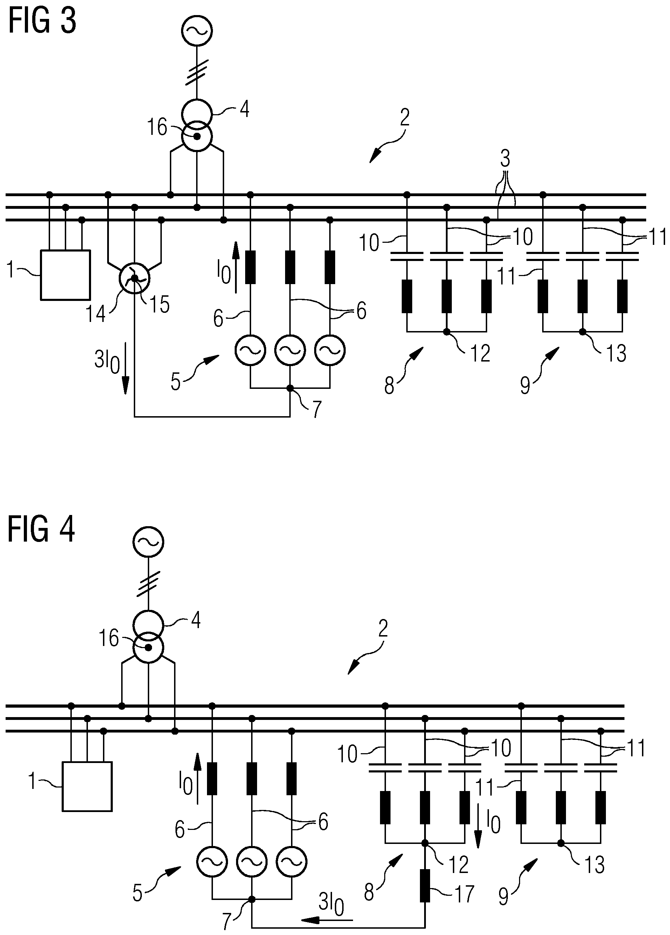

Gemäß den FIG 2 und 3 ist eine Zickzackwicklung 14 vorhanden. Die Zickzackwicklung 14 ist an die Phasen 3 des Stromsystems 2 angeschaltet. Bei der Ausgestaltung gemäß FIG 2 ist die Zickzackwicklung 14 als Sekundärwicklung in den Netztransformator 4 eingebaut. Sie übernimmt also die "normale" Funktion der Sekundärwicklung, die Phasen 3 des Stromsystems 2 aus dem externen Netz zu speisen. Bei der Ausgestaltung gemäß FIG 3 ist die Zickzackwicklung 14 als vom Netztransformator 4 verschiedener Zickzacktransformator ausgebildet.

Auch das Stromnullsystem weist drei Vektoren gleicher Amplitude auf, nachfolgend als A", B" und C" bezeichnet. Der Phasenversatz der Vektoren A", B" und C" relativ zueinander ist null. Die Vektoren A", B" und C" rotieren also gleichphasig. Sie rotieren gleichsinnig zu den Vektoren A, B, C des Strommitsystems.

Die durch die Vektoren A, A' und A" beschriebenen Ströme fließen in einer der Phasen 3 des Stromsystems 2. Die Ströme B, B' und B" fließen in einer anderen der Phasen 3 des Stromsystems 2. Die Ströme C, C' und C" fließen in der dritten der Phasen 3 des Stromsystems 2.

Die Amplituden der Vektoren A, B, C des Strommitsystems, der Vektoren A', B', C' des Stromgegensystems und der Vektoren A", B", C" des Stromnullsystems können unterschiedlich sein. Auch die Phasenwinkel des Vektors A zum Vektor A' und zum Vektor A" können verschieden voneinander sein. Zusammen definieren das Strommitsystem, das Stromgegensystem und das Stromnullsystem die in den Phasen 3 des Stromsystems 2 fließenden Ströme.

Bei der Ausgestaltung von FIG 2 kann der (gemeinsame) Sternpunkt 15 der Zickzackwicklung 14 geerdet sein. Bei der Ausgestaltung von FIG 3 kann einer der beiden Sternpunkte 15, 16 von Netztransformator 4 und Zickzacktransformator 14 geerdet sein. Alternativ ist es bei der Ausgestaltung von FIG 3 möglich, dass keiner der beiden Sternpunkte 15, 16 von Netztransformator 4 und Zickzacktransformator 14 geerdet ist. Beide Sternpunkte 15, 16 sollten aber nicht geerdet sein.

Alternativ zum Vorhandensein einer Zickzackwicklung (siehe die Ausgestaltungen gemäß FIG 2 und FIG 3) ist es gemäß FIG 4 erfindungsgemäß möglich, dass der gemeinsame Sternpunkt 7 des Multilevelkonverters 5 mit dem Sternpunkt 12, 13 eines der Filterkreise 8, 9 verbunden ist. Bei der Ausgestaltung gemäß FIG 4 ist der gemeinsame Sternpunkt 7 des Multilevelkonverters 5 somit einerseits über die Stränge 6 des Multilevelkonverters 5 und andererseits über den entsprechenden Filterkreis 8 mit den Phasen 3 des Stromsystems 2 verbunden.

Auch bei der Ausgestaltung gemäß FIG 4 ist die Verbindung über den entsprechenden Filterkreis 8 derart, dass - bezogen auf diese Verbindung - in Bezug auf das Stromnullsystem des Stromsystems 2 eine niederohmige und in Bezug auf das Strommitsystem des Stromsystems 2 und das Stromgegensystem des Stromsystems 2 eine hochohmige Verbindung des gemeinsamen Sternpunkts 7 des Multilevelkonverters 5 mit den Phasen 3 des Stromsystems 2 besteht. Beispielsweise kann zu diesem Zweck entsprechend der Darstellung von FIG 4 zwischen dem gemeinsamen Sternpunkt 12 des Filterkreises 8 und dem gemeinsamen Sternpunkt 7 des Multilevelkonverters 5 eine Drossel 17 angeordnet sein. Die Drossel 17 kann insbesondere derart dimensioniert sein, dass die kombinierte Impedanz von Drossel 17 und Filterkreis 8 Null ist.

Die vorliegende Erfindung weist viele Vorteile auf. Insbesondere ist die Spannungsbelastung des Multilevelkonverters 5 bei der erfindungsgemäßen Ausgestaltung um den Faktor 1,7320 niedriger als bei einer Dreieckanschaltung. Die erfindungsgemäße Stromversorgungseinrichtung kann daher bei gleicher Leistungsfähigkeit erheblich kostengünstiger realisiert werden als eine vergleichbare Stromversorgungseinrichtung des Standes der Technik. Bei Neuanlagen, bei denen die Zickzackwicklung 14 als Sekundärwicklung in den Netztransformator 4 eingebaut werden kann, sind Einsparungen von 20% bis 40% möglich. Bei einer Nachrüstung sind ebenfalls Einsparungen möglich, auch wenn diese etwas niedriger sind.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Stromversorgungseinrichtung für eine nichtlineare, zeitlich variierende Last (1),
- wobei die Stromversorgungseinrichtung ein Stromsystem (2) mit mehreren Phasen (3) aufweist,
- wobei an die Phasen (3) des Stromsystems (2) die nichtlineare, zeitlich variierende Last (1) und ein Blindleistungskompensator (5) angeschaltet sind,
- wobei der Blindleistungskompensator (5) als Multilevelkonverter mit mehreren Strängen (6) ausgebildet ist,
- wobei die Stränge (6) des Multilevelkonverters (5) einerseits mit je einer der Phasen (3) des Stromsystems (2) und andererseits an einem gemeinsamen Sternpunkt (7) miteinander verbunden sind,
- wobei die Stromversorgungseinrichtung einen Filterkreis (8) aufweist, über den Oberschwingungen von Last- und Konverterströmen filterbar sind,
- wobei der Filterkreis (8) mehrere Stränge (10) aufweist,
**dadurch gekennzeichnet,**
- **dass** die Stränge (10) des Filterkreises (8) einerseits mit je einer der Phasen (3) des Stromsystems (2) und andererseits an einem gemeinsamen Sternpunkt (12) des Filterkreises (8) miteinander verbunden sind,
- **dass** der gemeinsame Sternpunkt (7) des Multilevelkonverters (5) mit dem Sternpunkt (12) des Filterkreises (8) verbunden ist, so dass der gemeinsame Sternpunkt (7) des Multilevelkonverters (5) sowohl über die Stränge (6) des Multilevelkonverters (5) als auch über den Filterkreis (8) mit den Phasen (3) des Stromsystems (2) verbunden ist, und
- **dass** die Verbindung über den Filterkreis (8) derart ausgebildet ist, dass in Bezug auf das Stromnullsystem des Stromsystems (2) eine niederohmige und in Bezug auf das Strommitsystem des Stromsystems (2) und das Stromgegensystem des Stromsystems (2) eine hochohmige Verbindung des gemeinsamen Sternpunkts (7) des Multilevelkonverters (5) mit den Phasen (3) des Stromsystems (2) besteht.

2. Stromversorgungseinrichtung nach Anspruch 1,
**dadurch gekennzeichnet,**
**dass** zwischen dem gemeinsamen Sternpunkt (12) des Filterkreises (8) und dem gemeinsamen Sternpunkt (7) des Multilevelkonverters (5) eine Drossel (17) angeordnet ist.

3. Stromversorgungseinrichtung nach Anspruch 2,
**dadurch gekennzeichnet,**
**dass** die Drossel (17) derart dimensioniert ist, dass die kombinierte Impedanz von Drossel (17) und Filterkreis (8) Null ist.

4. Stromversorgungseinrichtung nach Anspruch 1, 2 oder 3,
**dadurch gekennzeichnet,**
**dass** die Stromversorgungseinrichtung mindestens einen weiteren Filterkreis (9) aufweist, über den Oberschwingungen von Last- und Konverterströmen filterbar sind.

5. Stromversorgungseinrichtung nach einem der obigen Ansprüche, **dadurch gekennzeichnet,**
**dass** die Anzahl an Phasen (3) des Stromsystems (2) drei ist.

## Claims

1. Power supply device for a nonlinear, time-varying load (1),
- wherein the power supply device has a power system (2) having a plurality of phases (3),
- wherein the nonlinear, time-varying load (1) and a reactive power compensator (5) are connected to the phases (3) of the power system (2),
- wherein the reactive power compensator (5) is embodied as a multilevel converter having a plurality of strands (6),
- wherein the strands (6) of the multilevel converter (5) are connected on the one hand to one of the phases (3) of the power system (2) in each case and on the other hand to one another at a common star point (7), wherein the power supply device has a filter circuit (8), by way of which harmonics of load and converter currents can be filtered,
- wherein the filter circuit (8) has a plurality of strands (10),
**characterised in that**
- the strands (10) of the filter circuit (8) are connected on the one hand to one of the phases (3) of the power system (2) in each case and on the other hand to one another at a common star point (12) of the filter circuit (8),
- the common star point (7) of the multilevel converter (5) is connected to the star point (12) of the filter circuit (8) such that the common star point (7) of the multilevel converter (5) is connected both via the strands (6) of the multilevel converter (5) and also via the filter circuit (8) to the phases (3) of the power system (2), and
- the connection via the filter circuit (8) is embodied in such a way that there is a low-resistance connection of the common star point (7) of the multilevel converter (5) to the phases (3) of the power system (2) with respect to the power zero sequence system of the power system (2) and a high-resistance connection with respect to the power positive sequence system of the power system (2) and to the power negative sequence system of the power system (2).

2. Power supply device according to claim 1,
**characterised in that**
a choke (17) is disposed between the common star point (12) of the filter circuit (8) and the common star point (7) of the multilevel converter (5).

3. Power supply device according to claim 2,
**characterised in that**
the choke (17) is dimensioned such that the combined impedance of choke (17) and filter circuit (8) is zero.

4. Power supply device according to claim 1, 2 or 3,
**characterised in that**
the power supply device has at least one further filter circuit (9) via which harmonics of load and converter currents can be filtered.

5. Power supply device according to one of the above claims,
**characterised in that**
the number of phases (3) of the power system (2) is three.

## Revendications

1. Dispositif d'alimentation en courant pour une charge (1) non linéaire variable dans le temps,
- dans lequel le dispositif d'alimentation en courant a un système (2) de courant, ayant plusieurs phases (3),
- dans lequel, sur les phases (3) du système (2) de courant, sont branchés la charge (1) non linéaire variable dans le temps et un compensateur (5) de puissance réactive,
- dans lequel le compensateur (5) de puissance réactive est constitué sous la forme d'un convertisseur à plusieurs niveaux, ayant plusieurs branches (6),
- dans lequel les branches (6) du convertisseur (5) à plusieurs niveaux sont reliées d'une part à respectivement l'une des phases (3) du système (2) de courant et d'autre part entre elles, en un point (7) neutre commun,
- dans lequel le dispositif d'alimentation en courant a un circuit (8) de filtrage, par lequel des harmoniques des courants de charge et de convertisseur peuvent être filtrés,
- dans lequel le circuit (8) de filtrage a plusieurs branches (10),
**caractérisé**
- **en ce que** les branches (10) du circuit (8) de filtrage sont reliées d'une part respectivement à l'une des phases du système (2) de courant et d'autre part entre elles en un point (12) neutre commun du circuit (8) de filtrage,
- **en ce que** le point (7) neutre commun du convertisseur (5) à plusieurs niveaux est relié au point (12) neutre du circuit (8) de filtrage, de manière à ce que le point (7) neutre commun du convertisseur (5) à plusieurs niveaux soit relié aux phases (3) du système (2) de courant, tant par les branches (6) du convertisseur (5) à plusieurs niveaux, qu'également par le circuit (8) de filtrage et
- **en ce que** la liaison, par le circuit (8) de filtrage, est constituée de manière à avoir, par rapport au système homopolaire du système (2) de courant, une liaison à petite valeur ohmique et par rapport au système direct du système (2) de courant et au système inverse du système (2) de courant, une liaison à grande valeur ohmique du point (7) neutre commun du convertisseur (5) à plusieurs niveaux, avec les phases (3) du système (2) de courant.

2. Dispositif d'alimentation en courant suivant la revendication 1,
**caractérisé**
**en ce qu'**une bobine (17) de self est montée entre le point (12) neutre commun du circuit (8) de filtrage et le point (7) neutre commun du convertisseur (5) à plusieurs niveaux.

3. Dispositif d'alimentation en courant suivant la revendication 2,
**caractérisé**
**en ce que** la bobine (17) de self est dimensionnée de manière à ce que l'impédance combinée de la bobine (17) de self et du circuit (8) de filtrage soit égale à zéro.

4. Dispositif d'alimentation en courant suivant la revendication 1, 2 ou 3,
**caractérisé**
**en ce que** le dispositif d'alimentation en courant a au moins un autre circuit (9) de filtrage, par lequel des harmoniques des courants de charge et de convertisseur peuvent être filtrés.

5. Dispositif d'alimentation en courant suivant l'une des revendications précédentes,
**caractérisé**
**en ce que** le nombre de phases (3) du système (2) de courant est de trois.
